# EUROPEAN PATENT APPLICATION

(11) **EP 3 699 834 A1**
(43) Date of publication of application: **26.08.2020**
(21) Application number: 20160745.4
(22) Date of filing: 31.07.2015
(51) Int. Cl.: G06Q 10/04, H02J 3/14, H02J 3/32, G06Q 50/06

(54) **PREDICTING AND OPTIMIZING ENERGY STORAGE LIFETIME PERFORMANCE WITH ADAPTIVE AUTOMATION CONTROL SOFTWARE**

(30) Priority: 31.07.2014 US 201462031804 P
(62) Divisional of application: 15749925.2
(71) Applicant: Growing Energy Labs Inc., San Francisco, California 94015 (US)
(72) Inventor: WARTENA, Ryan Craig, San Francisco, California 94110 (US); ERNST, Zachary Raymond, Oakland, California 94611 (US)
(74) Representative: Browne, Robin Forsythe

(57) **Abstract**

A transactive energy system design is linked to an energy automation control process. A design process provides a predictive analytics engine at its core. This design process includes three models: application modeling, health/asset modeling, and revenue modeling. An energy storage system health model is the combination of the application model with storage life characteristic data that comprises electrical efficiency, effective capacity, and capacity fade as a function of temperature, voltage range, and calendar life. These models enable a predictive analytics engine to inform energy automation control software how to operate. The inventive concept involves utilization of various core data communication methods. The predictive analysis uses the same algorithms and processes as those used in the actual eACS and energy operating system. The continuity from analytics to operations improves the accuracy of the economic models, which reduces risk to financial planning and system financing.

## Description

### CROSS-REFERENCE TO RELATED APPLICATIONS

This application claims priority to pending U.S. Provisional Application No. 62/031,804, filed on July 31, 2014, entitled "PREDICTING AND OPTIMIZING ENERGY STORAGE LIFETIME PERFORMANCE WITH ADAPTIVE AUTOMATION CONTROL SOFTWARE".

### BACKGROUND OF THE INVENTION

### 1. Field of the Invention

The present invention relates generally to energy storage systems. More specifically, it relates to software modeling and automating and optimizing multiple operations across multiple energy assets.

### 2. Description of the Related Art

Present energy automation control software (eACS) and energy operating systems are able to perform the basic function of managing the operation of one or more energy assets or devices. However, they lack tools and features that are critical for the ultimate goals of energy efficiency and economic optimization. One type of conventional eACS is SCADA, known to people skilled in the field of energy operating systems. These systems facilitate control of energy assets/devices but do not have native energy applications; they are essentially communication channels that operate among energy applications, energy devices/assets, and data stores. Although there are financial tools, such as spreadsheets and other modeling software in the market, they do not link directly to SCADA or similar existing energy systems and lack any degree of integration into these conventional systems.

Another disadvantage of SCADA and similar systems is the need for manual intervention and decision-making by human operators who oversee the operations. It is difficult for such operators to co-optimize applications and devices and are more likely to make errors and not see potential inefficiencies regarding various aspects of the system.

What is needed in the energy operating system and automation control field is more sophisticated tools and features that enable predictive analytics, dynamic and intelligent aggregation, asset-availability balancing for operations, the co-optimizations of multiple operations, and forward-lifetime modeling of energy storage systems and other energy assets. Energy automation control software and operating systems need to advance to the next level and enable energy asset optimization and cost savings. In other words, energy control and operating systems should have more intelligence by integrating tools such as predictive analytics engines, rich data streams and methodologies needed to operate energy systems.

### SUMMARY OF THE INVENTION

In one aspect of the present invention a method of creating models for use in a predictive analytics engine and subsequent operation of the engine in an adaptive energy operating system is described. The performance of an energy application for an energy asset is modeled. The energy asset health for an energy asset is modeled. The cost efficiency for the energy asset is modeled. A forward operating profile for the energy application is created. A forward availability profile for the energy asset is created.

In another aspect, a method of operating an adaptive energy operating system in communication with one or more energy assets is described. A forward availability profile for an asset and a forward operating profile for an application are received. A predictive analytics data package containing three models is received. Runtime operation profile data and runtime asset profile data are collected. Runtime operation profile data and asset profile data are compared with the models. The asset profile data is transformed into energy asset life characteristic data. A forward availability profile and forward operating profile are updated.

### BRIEF DESCRIPTION OF THE DRAWINGS

References are made to the accompanying drawings, which form a part of the description and in which are shown, by way of illustration, specific embodiments of the present invention:
FIG. 1 is a block diagram showing an aEOS configuration in accordance with one embodiment of the present invention;
FIG. 2 is a block diagram showing components and data streams in accordance with one embodiment; and
FIG. 3 is a flow diagram of a process in accordance with one embodiment describing in part the process within the aEOS;
FIG. 4 is a diagram showing three matrices relevant to storage life characteristic data in accordance with one embodiment of the present invention; and
FIGS. 5A and 5B are block diagrams of a computing system suitable for implementing various embodiments of the present invention.

### DETAILED DESCRIPTION OF THE INVENTION

Example embodiments of methods and systems for optimizing an energy storage system's lifetime performance and application economics are described. These examples and embodiments are provided solely to add context and aid in the understanding of the invention. Thus, it will be apparent to one skilled in the art that the present invention may be practiced without some or all of the specific details described herein. In other instances, well-known concepts have not been described in detail in order to avoid unnecessarily obscuring the present invention. Although these embodiments are described in sufficient detail to enable one skilled in the art to practice the invention, these examples, illustrations, and contexts are not limiting, and other embodiments may be used and changes may be made without departing from the spirit and scope of the invention.

Methods and system for linking a transactive energy system design to a process automation are described. One aspect of the invention includes a design process that provides a predictive analytics engine at its core. At a high level, this design process includes three models: application modeling, health/asset modeling, and revenue modeling. The health/asset model has many inputs, for example an energy storage system health model is the combination of the application model with storage life characteristic data, described below, that comprises electrical efficiency, effective capacity, and capacity fade as a function of temperature, Voltage range, and calendar life. The health/asset model can be for any type of device/asset. These models enable a predictive analytics engine to inform energy automation control software (eACS) how to operate. The inventive concept involves utilization of various core data communication methods. One primary aspect is that the predictive analysis uses the same algorithms and processes as those used in the actual eACS and energy operating system. The continuity from analytics to operations improves the accuracy of the economic models, which reduces risk to financial planning and system financing.

At the center of the present invention is the energy operating system which includes eACS. The energy operating system described here is developed by Growing Energy Labs, Inc. (GELI) of San Francisco. As described in pending U.S. Patent Application No. 13/898,283, the eACS developed by and assigned to GELI has numerous novel features and is referred to as an adaptive energy operating system (aEOS). For example it is able to operate one to multiple applications from one or more assets, providing a flexibility and scalability not found in conventional ACS. It also has other features although not directly related to the inventive concepts described herein. A primary methodology described in the earlier patent and important to the novel features described here is that every energy asset or device can be utilized for multiple applications. The inventive concepts of the present invention are embodied in the aEOS but parts may perform functions and create data streams from other locations. It is helpful to keep in mind that the benefits and utilization of the present invention are not dependent on novel improvements in the aEOS described and claimed in pending U.S. Patent Application No. 13/898,283. The methodologies and data streams, and benefits derived therefrom of the present invention, can be manifested or realized in a setting where there is only one energy asset (e.g., an energy storage system) and one application. However, it is expected that the methodologies and data streams of the present invention will be used in more complex environments having multiple assets, applications, consumers, etc., and that the flexible, scalable, multiple-application enabled aEOS described earlier will likely be utilized.

In one embodiment of the present invention, there are two enabling core data methods, characterized as data streams. These data streams, combined with certain storage lifetime characteristics data, described below, and historical data drive the transactive energy aspect of the present invention which includes predictive analysis, dynamic and intelligent data aggregation, asset-availability balancing for operations, multiple operations co-optimizations, and forward-lifetime modeling of energy storage systems and other energy assets.

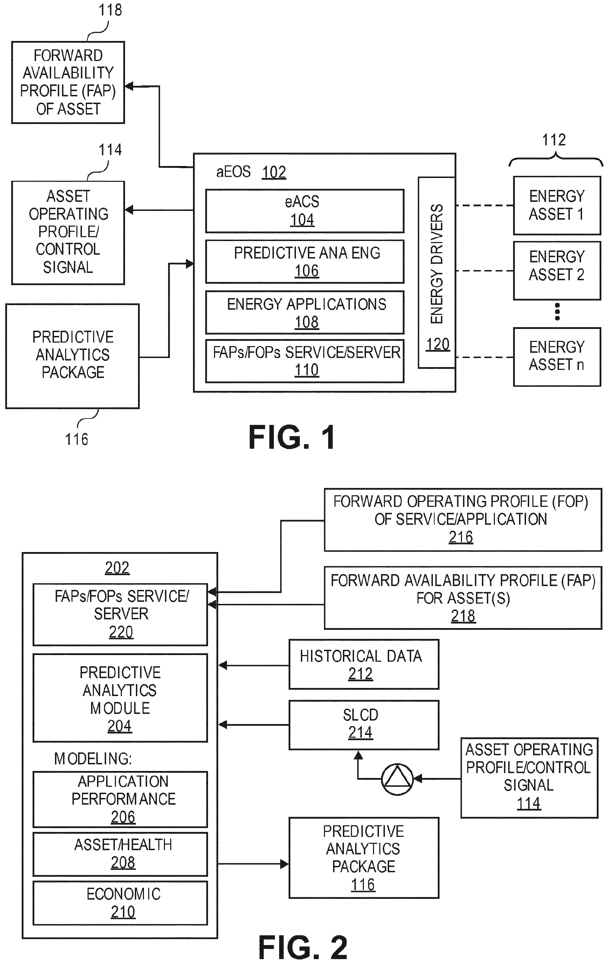

FIG. 1 is a block diagram showing an aEOS configuration in accordance with one embodiment of the present invention. An aEOS 102 includes a predictive analytics engine 106. It also has one or more energy-related applications 108. Operating in conjunction with or within aEOS 102 is a server for creating and utilizing certain profiles, specifically a forward operating profile (FOP) and a forward availability profile (FAP), referred to as a FOP/FAP server 110. Adoptive energy operating system 102 is in communication with one or more energy assets or devices 112. There is a wide variety of such devices or assets, a few common examples include energy storage systems (ESS, battery plus power converter), HVAC, load switches, lighting, chillers, EV chargers, solar panels, CHP, and diesel generators. In the described embodiment, an ESS is used to illustrate the present invention. Applications 108 in aEOS 102 direct the function performed by the ACS on the energy devices, it is the type of management or service being done on the devices. These applications include demand response, demand management, time-of-use shifting, frequency regulation, power quality, backup power and load islanding, etc. Also contained in aEOS 102 are energy asset drivers 120 for communicating with assets 112.

One of the outputs from aEOS 102 is an asset operating profile 114, described below. Another output is FAP of an asset 118. One of the inputs to aEOS 102, specifically for predictive analytics engine 106, is a predictive analytics package 116.

In one embodiment of the present invention, aEOS 102 contains intelligence on how to co-optimize performance of the one or more devices that are in communication with it. In an alternative embodiment, there is also a cloud configuration wherein the aEOS 102 operates on remote servers and connects to devices/assets via a gateway component. The aEOS 102 is able to perform certain predictive analytics with respect to the operation and management of the devices. This is done by the predictive engine in aEOS 102 which operates on what is described below as a predictive analytics package.

The predictive analysis of the present invention uses or simulates energy service applications, algorithms, and methods that are very similar or identical to those used in aEOS 102. This aspect of the invention, combined with using rich historical data from the customer, enables highly accurate predictions with respect to ESS performance and other asset optimization and cost efficiency (financing).

One critical component of the present invention is a predictive analytics package created from specific types of modeling. Outputs of this modeling (or design process) are profiles that are ultimately used to optimize asset operations. These are shown in FIG. 2. In one embodiment, three types of modeling are performed. One may be described as application (or performance) modeling. The objective with this modeling is to examine how an energy asset is performing over time by looking at historical output data for the device while operating to perform an operation/application. Another type is health/asset modeling of the energy device. With this modeling, an asset, such as an ESS or HVAC, is examined to see how it degrades as a function of being used. There is also a financial model for the asset or system. Here revenue that the asset is likely to generate over its lifetime by performance of a specific application is predicted. In one embodiment a dynamic rate structure library is used to connect energy operations to the economics in real time. Such economic modeling or logic does not presently exist in conventional ACS (typically an external business intelligence software suite is used to derive similar type data and decisions based on such software are made by human operators).

In one embodiment, historical data may be used to perform the modeling. This data is obtained from the entity operating the ACS and energy assets. For example, historical data on the different applications and devices may be derived from smart meters, bills, and other data.

In a specific embodiment of the present invention in which an ESS is described, storage life characteristics data (SLCD) is used in the modeling and overall predictive analysis of the asset for a specific application. In one implementation, this data is a multidimensional data set that enumerates how the battery performs for efficiency, effective capacity, and capacity fade as a function of charge rate, discharge rate, voltage range, temperature, and calendar life (battery age). The SLCD is used mostly in asset/health modeling but may be used in the other models. The SLCD is used as matrix element data, database architectures, or fit with parametric functions.

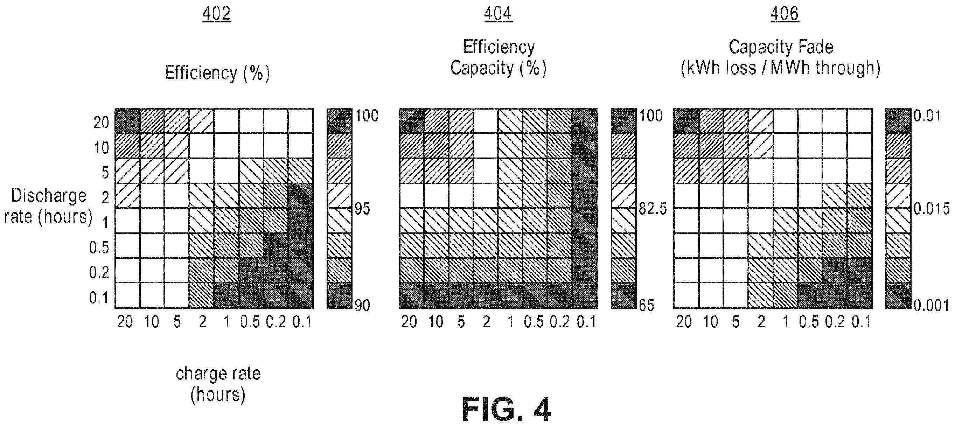

In one embodiment, the data is used to model battery degradation, application performance and economic returns. Historical data from the customer is combined with a specific application, for example, demand charge management (DCM), to generate a forward operating profile (FOP) for the energy storage system. A FOP may be instantiated, for example, as the output from a power converter system to the energy storage system. For an energy storage system, the battery's state of charge and the power converter's power capability may be considered as the asset's forward availability profile (FAP). A battery's energy storage capacity may be assigned, in full or in part, to one or more applications. For example, when the probability of peak demand event is high, all the battery's capacity may be assigned to the DCM application, and the battery will be unavailable to perform other applications (zero FAP). When the probability of a facility peak is low, only a portion of battery's capacity will be assigned to DCM and the rest of the FAP can be partitioned among other applications. The energy storage characteristic functions are derived from tables, which can be represented as heat maps shown in FIG. 4. The output of the asset/health model is the lifetime performance profiles. The tables in FIG. 4 with charge and discharge on the axes show efficiency (round trip), effective capacity, and capacity fade which are also functions of temperature, voltage range, and calendar life. Raw battery data is generated from operations of the energy operating system. This data is compared to the SLCD in order to update the model. FOPs are modeled with the SLCD to forecast efficiency losses, operational performance, and degradation. The output of this model can be used, in an iterative process, to modify and optimize the FOP. The SLCD was originally designed with ESS in mind; however, because it essentially measures lifetime efficiencies, degradations, and limitations, it can be used with other types of energy assets, such as HVAC or generators. Predicting how a particular ESS ages as a function of use is critical to de-risk the financing of energy storage applications.

As noted, given the charge and discharge rates of the ESS (battery), along with temperature, voltage range, calendar life, etc., the model generates energy storage characteristic functions including efficiency, effective capacity, and capacity fade.

In one embodiment, the effects of other applications on an asset can be used to create the predictive analytics package in a feedback loop. The difference between the prediction, derived from the modeling, and the actual operational performance of the asset is used to update the model. After each model update the application profile and FOP are re-computed. This can be characterized as a continuous correction, that is, in real-time, updating the behavior of an energy asset.

FIG. 2 is a block diagram showing components and data streams in accordance with one embodiment, most of which have been described above, but are shown together here. The primary component 202 contains a predictive analytics module 204 that creates, in part, predictive analytics package 116 which is transmitted via a suitable communications means to aEOS 102. The modeling component is comprised of three modeling modules: application performance 206, asset/health 208, and economic 210. Inputs to module 202 include historical data of the energy asset users, such as bills, smart meter data, and other customer data. The other input to module 202 includes SLCD 214 which is created in part from deltas derived from asset profiles 114. The result of the modeling are FOPs/FAPs that are used together with the modeling to create predictive analytics package 116. Also shown is an FOP/FAP server 220 similar to the one shown in FIG. 1. It accepts as input FOP for service/application 216 and FAP for asset 218.

In one embodiment, a device/asset FAP is calculated to fulfill an application/operation FOP and both profiles are contained in the predictive analytics data package. As noted, working in conjunction with aEOS is a FAPs/FOPs method and server. It can operate as a remote server (in the cloud) or locally with the energy assets and eACS, or anywhere in the network. In one embodiment, an FAP contains at least three features in a "behind the meter" example: power (kW), amount of energy used in future (Kw/h), and economic function or indicator ($), which likely contains a variety of factors and may function as a tuning parameter. An FOP has a power profile as well as an economic profile.

In the battery or ESS embodiment, the predictive analysis and the operations profile may be used to ensure or check ESS warranty compliance, and automatically alert the operator in the event of aberrant behavior. In another use case, the data may be helpful in checking financial compliance of the ESS or other asset.

In one embodiment, an asset is calculated to have a forward availability profile (FAP). It should also be noted that multiple assets will each have their own FAP and that the FAPs may be collected and indexed into an individual FAP. In one embodiment, calculations done to derive a FOP are done on an asset. During typical operation, there is one operation performed on one asset, which may have multiple applications (e.g., peak shifting, demand response, stabilization, etc.) which can be performed concurrently. This is an aspect of the co-optimization that determines the partitioning of capacity. An FOP becomes an OP or AP at energy asset runtime. This asset profile contains actual runtime data comprised of raw data that may be used to extract elements from SLCD.

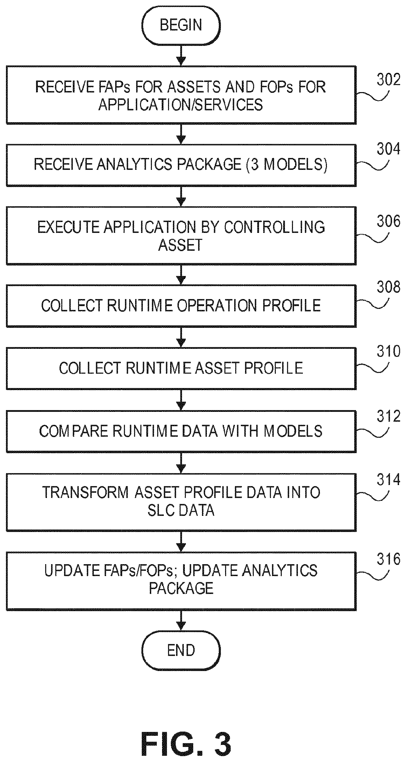

FIG. 3 is a flow diagram of a process in accordance with one embodiment describing in part the process within the aEOS. At step the aEOS receives FAPs (kW, kW/h, and $) for one or more assets and FOPs (kW) for one or more energy applications or services. At step 304 the aEOS receives a predictive data analytics package which contains the models described above for application performance, asset/health, and costs. More specifically, it contains the three matrices described below, each a function of temperature, voltage range (V2-V1), and point in time in calendar life of asset. At step 306 one or more energy applications are executed by controlling an asset within the FAP according to FOP or energy application. At step 308 the aEOS collects data for an application runtime profile. At step 310 it collects data for an asset runtime profile. At step 312 the runtime data from the two profiles are compared with the three models or matrices. At step 314 the asset profile data is transformed into data that can be stored in SLDC. At step 316 the FAPs and FOPs are updated and a new (updated) predictive analytics data package is created.

FIG. 4 is a diagram showing three matrices relevant to storage life characteristic data in accordance with one embodiment of the present invention. The x-axis for all three shows charge rate (hours) and the y-axis shows discharge rate (hours). Matrix 402 shows efficiency (%), matrix 404 shows efficiency capacity (%), and matrix 406 shows capacity fade. The three variables shown in matrices 402-406 (efficiency, efficiency capacity, and capacity fade) are dimensional. The tables reveal one slice or instance through this space at a 1) specific temperature, 2) voltage range, and 3) point in calendar life. The data in tables 402-406 change resulting in new tables when the temperature, voltage range or calendar life data changes.

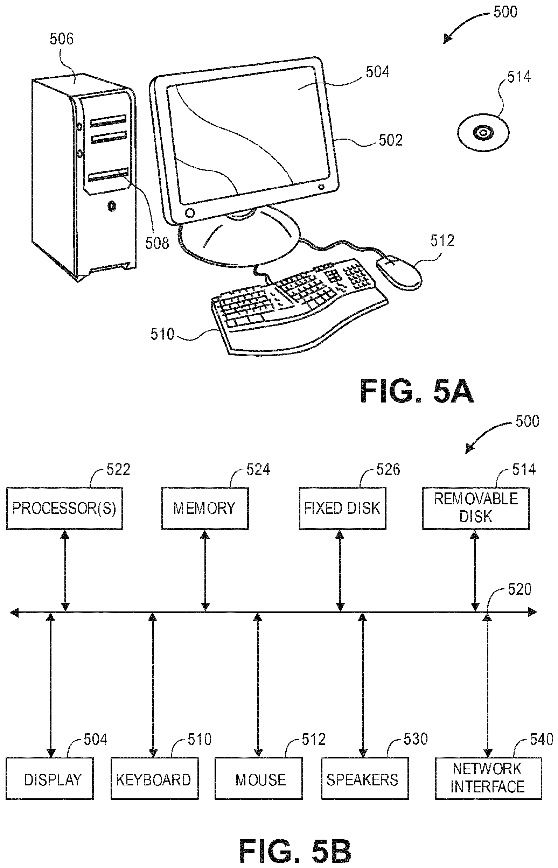

FIGS. 5A and 5B illustrate a generic computing system 500, such as a mobile device, suitable for implementing specific embodiments of the present invention. Some of the devices that can be used in the present invention may have other features or components that are not shown in FIGS. 5A and 5B and not all the components shown in these figures (e.g., the keyboard) are needed for implementing the present invention. As such, FIG. 5A shows one possible physical implementation of a computing system as this term is broadly defined.

In one embodiment, system 500 includes a display or screen 504. This display may be in the same housing as system 500. It may also have a keyboard 510 that is shown on display 504 (i.e., a virtual keyboard) or may be a physical component that is part of the device housing. It may have various ports such as HDMI or USB ports (not shown). Computer-readable media that may be coupled to device 500 may include USB memory devices and various types of memory chips, sticks, and cards.

FIG. 5B is an example of a block diagram for computing system 500. Attached to system bus 520 is a variety of subsystems. Processor(s) 522 are coupled to storage devices including memory 524. Memory 524 may include random access memory (RAM) and read-only memory (ROM). As is well known in the art, ROM acts to transfer data and instructions uni-directionally to the CPU and RAM are used typically to transfer data and instructions in a bi-directional manner. Both of these types of memories may include any suitable of the computer-readable media described below. A fixed disk 526 is also coupled bi-directionally to processor 522; it provides additional data storage capacity and may also include any of the computer-readable media described below. Fixed disk 526 may be used to store programs, data and the like and is typically a secondary storage medium that is slower than primary storage. It will be appreciated that the information retained within fixed disk 526, may, in appropriate cases, be incorporated in standard fashion as virtual memory in memory 524.

Processor 522 is also coupled to a variety of input/output devices such as display 504 and network interface 540. In general, an input/output device may be any of: video displays, keyboards, microphones, touch-sensitive displays, tablets, styluses, voice or handwriting recognizers, biometrics readers, or other devices. Processor 522 optionally may be coupled to another computer or telecommunications network using network interface 540. With such a network interface, it is contemplated that the CPU might receive information from the network, or might output information to the network in the course of performing the above-described method steps. Furthermore, method embodiments of the present invention may execute solely upon processor 522 or may execute over a network such as the Internet in conjunction with a remote processor that shares a portion of the processing.

In addition, embodiments of the present invention further relate to computer storage products with a computer-readable medium that have computer code thereon for performing various computer-implemented operations. The media and computer code may be those specially designed and constructed for the purposes of the present invention, or they may be of the kind well known and available to those having skill in the computer software arts. Examples of computer-readable media include, but are not limited to: magnetic media such as hard disks, floppy disks, and magnetic tape; optical media such as CD-ROMs and holographic devices; magneto-optical media such as floptical disks; and hardware devices that are specially configured to store and execute program code, such as application-specific integrated circuits (ASICs), programmable logic devices (PLDs) and ROM and RAM devices. Examples of computer code include machine code, such as produced by a compiler, and files containing higher-level code that are executed by a computer using an interpreter.

Although illustrative embodiments and applications of this invention are shown and described herein, many variations and modifications are possible which remain within the concept, scope, and spirit of the invention, and these variations would become clear to those of ordinary skill in the art after perusal of this application. Accordingly, the embodiments described are to be considered as illustrative and not restrictive, and the invention is not to be limited to the details given herein, but may be modified within the scope and equivalents of the appended claims. The following clauses further reflect or emphasize aspects of the present disclosure that may be supplementary to or independent of the invention as claimed but which fall within the totality of the disclosed inventive contribution.

### Clauses:

I. A method of modeling and subsequent operating of an adaptive energy operating system, the method comprising:
   modeling energy application performance for an energy asset;
   modeling energy asset health for the energy asset;
   modeling cost efficiency of the energy asset;
   creating a forward operating profile for the energy application; and
   creating a forward availability profile for the energy asset.
II. A method as recited in clause I, further comprising:
   combining the forward operating profile and forward availability profile with energy asset characteristics data and historical data, thereby enabling predictive analysis.
III. A method as recited in clause I, further comprising:
   outputting an asset operating profile.
IV. A method as recited in clause I, further comprising:
   creating a predictive analytics data package containing the forward operating profile and the forward availability profile; and
   inputting said data package to the adaptive energy operating system.
V. A method as recited in clause I, further comprising:
   performing predictive analytics for operation and management of energy devices.
VI. A method as recited in clause I, further comprising:
   simulating energy service applications, algorithms, and methods that are used in the adaptive energy operating system when performing the modeling.
VII. A method as recited in clause I, wherein modeling energy asset health further comprises:
   examining degradation as a function of use.
VIII. A method as recited in clause I, wherein modeling for cost efficiency further comprises:
   utilizing a dynamic rate structure library to connect energy with economics.
IX. A method as recited in clause I, wherein modeling for cost efficiency further comprises:
   predicting revenue the asset will likely generate over asset lifetime.
X. A method as recited in clause I, further comprising:
   utilizing storage life characteristics data in predictive analysis; and
   utilizing efficiency, effective capacity, and capacity fade as a function of charge rate and discharge rates at a given temperature, voltage range, and calendar life of the asset.
XI. A method as recited in clause I, further comprising:
   utilizing battery charge and discharge rates;
   utilizing temperature, voltage range, and calendar life; and
   generating energy storage characteristic functions including efficiency, effective capacity, and capacity fade of a battery.
XII. A method as recited in clause I, further comprising:
   utilizing the difference between a prediction derived from modeling and actual operational performance of an asset, wherein a model can be updated.
XIII. A method as recited in clause I, further comprising:
   re-computing an application profile and forward operating profile, thereby updating the behavior of the asset in real-time.
XIV. A method as recited in clause I, further comprising:
   calculating an asset forward availability profile to fulfill an application forward operating profile; and
   storing said forward availability profile and said forward operating profile in a predictive analytics data package.
XV. A method of operating an adaptive energy operating system in communication with one or more energy assets, the method comprising:
   receiving a forward availability profile for an asset and a forward operating profile for an application;
   receiving a predictive analytics data package containing models;
   collecting runtime operation profile data and runtime asset profile data;
   comparing runtime operation profile data and runtime asset profile data with models;
   transforming asset profile data into energy asset life characteristic data; and
   updating forward availability profile and forward operating profile.
XVI. A method as recited in clause XV, wherein the models include an application performance model, an asset/health model, and a financial model.
XVII. A method as recited in clause XV. further comprising:
   executing an application by a controlling asset.
XVIII. A method as recited in clause XV, further comprising:
   updating the predictive analytics data package.
XIX. An adaptive energy operating system comprising:
   a predictive analytics engine;
   one or more energy-related applications;
   a server for creating and utilizing a forward operating profile and a forward availability profile; and
   energy automation control software.
XX. An adaptive energy operating system as recited in clause 19 further comprising:
   one or more energy device drivers.

## Claims

1. A method for using an adaptive energy management platform to remotely operate a plurality of distributed energy assets, wherein a distributed energy asset of said plurality of distributed energy assets is configured to perform a plurality of energy applications, said method comprising:
generating an application performance model for each of said plurality of energy applications performed by said energy asset;
generating a health model for said energy asset;
generating a revenue generation model for said energy asset;
generating an energy asset model for said energy asset based on said application performance model, said health model, and said revenue generation model;
based on said energy asset model, creating an initial forward availability profile for said energy asset, wherein said initial forward availability profile provides at least an assignment of battery capacity among said plurality of energy applications performed by said energy asset; and
co-optimizing performance of said plurality of energy applications using said initial forward availability profile, wherein said co-optimizing reduces efficiency losses or degradation of said distributed energy asset.

2. The method of claim 1, wherein generating said application performance model for each of said plurality of energy applications comprises analyzing historical output data captured during performance of each energy application by said energy asset.

3. The method of claim 1 or 2, wherein generating said health model for said energy asset comprises analyzing degradation of said energy asset over time.

4. The method of any preceding claim, further comprising dynamically optimizing operation of said energy asset in real-time and during operation, wherein said dynamically optimizing comprises:
updating said energy asset model based on a difference between one or more predictions derived from said energy asset model and actual operational performance of said energy asset, and
upon updating said energy asset model, re-computing said initial forward availability profile.

5. The method of any preceding claim, further comprising creating a forward operating profile for each of said plurality of energy applications performed by said energy asset.

6. The method of claim 5, further comprising combining said forward availability profile and said forward operating profile with energy asset characteristic data and historical data to provide predictive analysis.

7. The method of claim 5 or 6, further comprising creating a predictive analytics data package containing said forward operating profile and said forward availability profile.

8. The method of claim 5, 6 or 7, further comprising performing predictive analytics for operation and management of said distributed energy asset.

9. The method of any of claims 5 to 8, further comprising simulating performance of said plurality of energy applications when performing the modeling.

10. The method of any preceding claim, wherein generating said health model for said energy asset comprises examining degradation as a function of use.

11. The method of any of claims 1 to 9, wherein generating said health model for said energy asset comprises examining degradation as a function of calendar life.

12. The method of any preceding claim, wherein generating said revenue generation model for said energy asset comprises dynamically connecting energy operations with financial data.

13. The method of any of claims 1 to 11, wherein generating said revenue generation model for said energy asset comprises predicting revenue that said energy asset is expected generate over its lifetime.

14. The method of any preceding claim, wherein said adaptive energy management platform includes an adaptive energy operating system, and wherein the plurality of distributed energy assets each perform said plurality of energy applications using the same algorithms and processes as those used in said adaptive energy operating system.

15. The method of any preceding claim, wherein said adaptive energy management platform operates over a cloud.
